# EUROPEAN PATENT APPLICATION

(11) **EP 4 249 139 A1**
(43) Date of publication of application: **27.09.2023**
(21) Application number: 22874271.4
(22) Date of filing: 10.06.2022
(51) Int. Cl.: B09B 3/00, H01M 6/52, H01M 10/54

(54) **BATTERY PROCESSING SYSTEM AND BATTERY PROCESSING METHOD**

(30) Priority: 30.09.2021 CN 202111163500
(71) Applicant: Contemporary Amperex Technology Co., Limited, Ningde, Fujian 352100 (CN)
(72) Inventor: LU, Yi, Ningde, Fujian 352100 (CN); FENG, Tao, Ningde, Fujian 352100 (CN); FEI, Xinlu, Ningde, Fujian 352100 (CN); XIE, Bin, Ningde, Fujian 352100 (CN); LI, Keqiang, Ningde, Fujian 352100 (CN); ZHAO, Fenggang, Ningde, Fujian 352100 (CN)
(74) Representative: Ziebig Hengelhaupt Intellectual Property Attorneys Patentanwaltsanwaltskanzlei PartGmbB
(86) International application number: PCT/CN2022/098014
(87) International publication number: WO 2023/050873

(57) **Abstract**

This application relates to a battery handling system and a battery handling method. The battery handling system includes: a moving mechanism; an accommodating mechanism, including a first side and a second side that are opposite each other along a length direction of the accommodating mechanism; a plurality of immersion mechanisms, arranged in sequence along the length direction of the accommodating mechanism, where the plurality of immersion mechanisms are movably connected to the accommodating mechanism, and the immersion mechanism accommodates an immersion liquid; and a transfer mechanism, arranged opposite the first side of the accommodating mechanism and configured to transfer waste of a battery to the immersion mechanisms, where the waste is immersed in the immersion liquid. The accommodating mechanism is provided in plurality, and the plurality of accommodating mechanisms are arranged along a width direction of the accommodating mechanism. In adjacent two of the accommodating mechanisms, the second side of one of the accommodating mechanisms is opposite the first side of another one of the accommodating mechanisms. The moving mechanism is configured to move the immersion mechanism that is in one of the accommodating mechanisms and near the second side to the first side of another one of the accommodating mechanisms, and relocate the waste that is in the immersion mechanism. This application can improve the production safety of batteries.

## Description

### CROSS-REFERENCE TO RELATED APPLICATIONS

This application claims priority to Chinese patent application No. 202111163500.3, filed on September 30, 2021 and entitled "BATTERY HANDLING SYSTEM AND BATTERY HANDLING METHOD", which is incorporated herein by reference in its entirety.

### TECHNICAL FIELD

This application relates to the field of battery production technologies, and in particular to a battery handling system and a battery handling method.

### BACKGROUND

Battery cells are widely used in electronic devices, such as mobile phones, laptop computers, electric bicycles, electric cars, electric planes, electric boats, electric toy cars, electric toy boats, electric toy planes, and electric tools.

In a production process of battery cells, waste of the batteries is produced and the waste increases safety hazards. How to enhance safety in the battery cell production process is a pressing technical problem for battery technologies.

### SUMMARY

This application provides a battery handling system and a battery handling method that can improve safety performance of battery production.

According to a first aspect, an embodiment of this application provides a battery handling system, including:
a moving mechanism;
an accommodating mechanism, including a first side and a second side that are opposite each other along a length direction of the accommodating mechanism, configured to accommodate a plurality of immersion mechanism and move the plurality of immersion mechanisms within the accommodating mechanism;
the plurality of immersion mechanisms, arranged in sequence along the length direction of the accommodating mechanism, where the plurality of immersion mechanisms are movably connected to the accommodating mechanism in a direction of the first side pointing toward the second side, and the immersion mechanism accommodates an immersion liquid; and
a transfer mechanism, arranged opposite the first side of the accommodating mechanism and configured to transfer waste of a battery to the immersion mechanism, where the waste is immersed in the immersion liquid.

The accommodating mechanism is provided in plurality. The plurality of accommodating mechanisms are arranged along a width direction of the accommodating mechanism. In adjacent two of the accommodating mechanisms, the second side of one of the accommodating mechanisms is opposite the first side of another one of the accommodating mechanisms.

The moving mechanism is configured to move the immersion mechanism that is in one of the accommodating mechanisms and near the second side to the first side of another one of the accommodating mechanisms, and relocate the waste that is in the immersion mechanism.

In the foregoing solution, the transfer mechanism of this application is opposite the first side of the accommodating mechanism and configured to transfer the waste of the battery to the immersion mechanism so that the waste is in contact with the immersion liquid. The waste is physically wrapped by the immersion liquid and becomes inert, or a chemical reaction takes place between the waste and the immersion liquid to reduce activity of the waste. Thus, the waste is disposed of safely, improving safety of the battery production process. The accommodating mechanism is provided in plurality, and each accommodating mechanism can accommodate a plurality of immersion mechanisms. The plurality of accommodating mechanisms can operate simultaneously to improve efficiency of waste disposal. In addition, the plurality of accommodating mechanisms are arranged along the width direction of the accommodating mechanisms, which can greatly save the space occupied by the battery handling system. In adjacent two of the accommodating mechanisms, the second side of one of the accommodating mechanisms is opposite the first side of another one of the accommodating mechanisms. The moving mechanism can move the immersion mechanism that is in one of the accommodating mechanisms and near the second side to the first side of another one of the accommodating mechanisms. The moving of the immersion mechanisms allows for continuity of the production, further improving the efficiency of waste disposal.

In some embodiments, the accommodating mechanism accommodates an immersion liquid. The immersion mechanism includes a first communicating portion, where the first communicating portion is configured to communicate the accommodating mechanism with the immersion mechanism to allow the immersion liquid to flow between the accommodating mechanism and the immersion mechanism.

In the embodiments of this application, the accommodating mechanism is provided with the immersion liquid, and the immersion liquid flows into the immersion mechanism through the first communicating portion, so that the waste and the immersion liquid complete an immersion process in the immersion mechanism. After the completion of the immersion process, when the moving mechanism moves the immersion mechanism, the immersion liquid in the immersion mechanism flows out to the accommodating mechanism through the first communicating portion, which can reduce weight of the moving mechanism, thereby reducing energy consumption.

In some embodiments, the accommodating mechanism includes an accommodating portion and a conveying portion, where the conveying portion is arranged in the accommodating portion, and the accommodating portion accommodates the immersion liquid.

The immersion mechanism includes: an immersion portion, arranged inside the accommodating portion, where the immersion portion is provided with the first communicating portion to allow the immersion liquid to flow between the accommodating portion and the immersion portion; and a moving portion, configured to carry the immersion portion to move in the accommodating portion, where the conveying portion drives the moving portion to move so that the immersion mechanism moves relative to the accommodating portion. In the embodiments of this application, the moving portion moves relative to the accommodating portion and can move along a length direction of the accommodating portion, so that the immersion mechanism can move relative to the accommodating portion from a first side to a second side.

In some embodiments, the accommodating mechanism includes a guide portion that extends along the length direction of the accommodating mechanism, the guide portion is connected to the accommodating portion, the guide portion is movably connected to the moving portion, and the guide portion is configured to limit the moving portion in the width direction. In the embodiments of this application, when the moving portion moves along the length direction of the accommodating mechanism, the moving portion is under the limiting of the guide portion and therefore does not deviate, thereby ensuring overall stability of the immersion mechanism during movement.

In some embodiments, the immersion portion includes a bottom wall and a side wall. The bottom wall is rotatably connected to the side wall, so that the bottom wall and the side wall enclose an immersion cavity to carry the waste, or the bottom wall and the side wall are separated to release the waste. In the embodiments of this application, the bottom wall and the side wall enclose the immersion cavity. The waste transferred by the transfer mechanism is released into the immersion cavity. The immersion portion moves from the first side to the second side, and the immersion of the waste is completed in the immersion portion. The moving mechanism moves the immersion portion to a next operation, for example, to a drying mechanism. The bottom wall and the side wall are separated and the waste can be released into the drying mechanism for drying.

In some embodiments, the immersion portion further includes a top wall, the top wall being arranged on a side of the side wall that faces away from the bottom wall, and the top wall being configured to cover the immersion cavity. The top wall in the embodiments of this application can prevent the waste from floating out of the immersion mechanism.

In some embodiments, the transfer mechanism includes two collection members that are opposite each other, the two collection members being rotatably connected to each other, so that the two collection members move toward each other and come together to form a collection cavity for carrying the waste, or the two collection members move away from each other to release the waste into the immersion mechanism. In the embodiments of this application, when the transfer mechanism needs to carry waste, the two collection members come together to form a collection cavity, and the waste can be accommodated in the collection cavity. When the transfer mechanism needs to release waste into the immersion mechanism, the two collection members move away from each other and the waste can be released from the collection cavity into the immersion mechanism.

In some embodiments, the transfer mechanism includes a first drive mechanism, a connecting member, and a bracket. The connecting member includes a first connecting rod and two second connecting rods arranged opposite each other. The first connecting rod is in drive connection with the first drive mechanism. The second connecting rod includes a first end and a second end that are opposite each other. The first end is rotatably connected to the first connecting rod via a first connecting shaft, and the first connecting shaft is fixedly connected to the first connecting rod.

The collection member includes a collection portion and a third connecting rod, and the third connecting rod includes a third end and a fourth end that are opposite each other. The third end is fixedly connected to the collection portion, and the third end is rotatably connected to the second end. The fourth end is rotatably connected to the bracket via a second connecting shaft, and the second connecting shaft is fixedly connected to the bracket.

The first drive mechanism drives the first connecting rod to move relative to the bracket, the first connecting rod and the second connecting rod rotate relative to each other, and the second connecting rod and the third connecting rod rotate relative to each other, so that the two collection portions move toward or away from each other.

In the embodiments of this application, when the transfer mechanism needs to carry waste, the first drive mechanism drives the first connecting rod to move, and the two collection portions move toward each other and come together to form a collection cavity, so the waste can be carried in the collection cavity. When the transfer mechanism needs to release waste, the first drive mechanism drives the first connecting rod to move, and the two collection portions move away from each other to release the waste into the immersion mechanism.

In some embodiments, the two collection members come together to form an opening of the collection cavity back away from the immersion mechanism. The transfer mechanism further includes a second drive mechanism and a top cover that is in drive connection with the second drive mechanism. The second drive mechanism drives the top cover to move so that the top cover closes or opens the opening. In the embodiments of this application, when the transfer mechanism needs to carry waste, the first drive mechanism drives the first connecting rod to move so that the two collection portions come together to form a collection cavity, and the second drive mechanism drives the top cover to move so that the top cover opens its opening, and thus the waste can be carried in the collection cavity. After the transfer mechanism receives the waste, the second drive mechanism drives the top cover to move, and the top cover closes the opening. This can prevent foreign objects from falling into the waste. In addition, when the waste is released from the transfer mechanism to the immersion mechanism, the top cover can block to some extent the waste from floating out of the transfer mechanism.

In some embodiments, the transfer mechanism includes a second communicating portion, where the second communicating portion communicates the collection cavity with the immersion mechanism to allow the immersion liquid to flow between the immersion mechanism and the collection cavity. The second communicating portion in the embodiments of this application communicates the collection cavity with the immersion mechanism to allow the immersion liquid to flow between the immersion mechanism and the collection cavity.

In some embodiments, the battery handling system further includes a drying mechanism. The moving mechanism is configured to transfer the immersion mechanism to an inlet of the drying mechanism, and the waste in the immersion mechanism is able to be released to the inlet of the drying mechanism and dried by the drying mechanism. In the embodiments of this application, the drying mechanism dries the waste, and the dried waste can be recycled.

In some embodiments, the drying mechanism further includes a reflux assembly that is configured to make the immersion liquid produced by the drying mechanism flow back to the immersion mechanism. The reflux assembly provided in the embodiments of this application facilitates recycling of the immersion liquid.

In some embodiments, an exhaust mechanism is included. The exhaust mechanism is opposite the accommodating mechanism and located above the accommodating mechanism, and the exhaust mechanism is configured to convey gases from the accommodating mechanism to an external environment. In the embodiments of this application, the provision of the exhaust mechanism can prevent external gases from entering the battery handling system, thereby improving the safety performance during the battery production process.

In some embodiments, the exhaust mechanism is opposite the first side and/or second side of the accommodating mechanism. External gases at the first side and/or the second side are likely to leak into the battery handling system. In the embodiments of this application, the exhaust mechanism is opposite the first side and/or the second side, which can effectively prevent gas leakage at the first side and/or the second side, further improving the safety performance during the battery production process.

In some embodiments, the battery handling system further includes: a detection mechanism, arranged inside the accommodating mechanism and configured to detect process parameters related to the inside of the accommodating mechanism; an adjustment mechanism, arranged inside the accommodating mechanism and configured to adjust the process parameters related to the inside of the accommodating mechanism; and a control mechanism, communicatively connected to the detection mechanism and the adjustment mechanism, and configured to control on/off of the adjustment mechanism according to the process parameters detected by the detection mechanism. The detection mechanism in the embodiments of this application transmits the process parameters detected to the control mechanism. The control mechanism performs calculation based on the received process parameters and sends a control instruction to the adjustment mechanism to control the adjustment mechanism to perform an action corresponding to the control instruction, thereby adjusting the process parameters related to the inside of the battery handling system, improving the safety performance during the battery production process.

According to a second aspect, an embodiment of this application provides a battery handling method using the battery handling system according to any one of the embodiments of the first aspect of this application. The method includes: transferring, by the transfer mechanism, the waste of the battery to the immersion mechanism located at the first side so as to immerse the waste in the immersion liquid; letting the immersion mechanism move to the second side of the accommodating mechanism in the direction of the first side pointing toward the second side; and providing the moving mechanism, where the moving mechanism moves the immersion mechanism that is in one of the accommodating mechanisms and near the second side to the first side of another one of the accommodating mechanisms, and relocates the waste that is in the immersion mechanism.

### BRIEF DESCRIPTION OF DRAWINGS

The features, advantages and technical effects of example embodiments of this application are described below with reference to the accompanying drawings.
FIG. 1 is a schematic diagram depicting a structure of a battery handling system according to some embodiments of this application;
FIG. 2 is a schematic diagram depicting a structure of a battery handling system according to some other embodiments of this application;
FIG. 3 is a schematic diagram depicting a structure of a transfer mechanism of a battery handling system according to some embodiments of this application;
FIG. 4 is a schematic diagram depicting a structure of the transfer mechanism shown in FIG. 3 being in an on state;
FIG. 5 is a schematic diagram depicting a structure of a transfer mechanism and an immersion mechanism of a battery handling system according to some embodiments of this application;
FIG. 6 is a schematic diagram depicting a structure of the transfer mechanism and immersion mechanism shown in FIG. 5 being in a state of releasing waste;
FIG. 7 is a schematic diagram depicting a structure of an immersion mechanism of a battery handling system according to some embodiments of this application;
FIG. 8 is a schematic diagram depicting a structure of the immersion mechanism shown in FIG. 7 being in an on state;
FIG. 9 is a schematic diagram depicting a structure of an accommodating mechanism and an immersion mechanism of a battery handling system according to some embodiments of this application;
FIG. 10 is a schematic diagram of the accommodating mechanism and immersion mechanism shown in FIG. 9 enlarged at I;
FIG. 11 is a schematic diagram depicting a structure of a drying mechanism of a battery handling system according to some embodiments of this application;
FIG. 12 is a schematic diagram depicting a structure of a battery handling system according to some other embodiments of this application; and
FIG. 13 is a schematic flowchart of a battery handling method according to some embodiments of this application.

The accompanying drawings are not drawn to scale.

Reference signs in the accompanying drawings:
X. length direction; Y width direction; J. immersion liquid; B. waste;
1. accommodating mechanism; 1a. first side; 1b. second side; 11. accommodating portion; 12. conveying portion; 13. guide portion; 131. first guide member; 132. second guide member;
2. immersion mechanism; 2a. first communicating portion; 21. immersion portion; 21a. immersion cavity; 211. bottom wall; 212. side wall; 213. top wall; 22. moving portion; 23. transition portion;
3. transfer mechanism; 31. collection member; 31b. second communicating portion; 311. collection portion; 312. third connecting rod; 312a. third end; 312b. fourth end; 313. second connecting shaft; 32. first drive mechanism; 331. first connecting rod; 332. second connecting rod; 332a. first end; 332b. second end; 333. first connecting shaft; 34. top cover; 35. bracket;
4. moving mechanism; 41. first moving portion; 42. second moving portion;
5. drying mechanism; 5a. inlet; 5b. outlet; 51. reflux assembly; 52. outer housing; 53. inner housing; 53a. first cavity; 53b. second cavity; 54. nozzle; 55. blade;
6. exhaust mechanism; 7. detection mechanism; 8. adjustment mechanism; and 9. control mechanism.

### DETAILED DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the embodiments described are some rather than all embodiments of this application. All other embodiments obtained by a person of ordinary skill in the art based on the embodiments of this application without creative efforts shall fall within the protection scope of this application.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection, and may refer to a direct connection, an indirect connection via an intermediate medium, or an internal communication between two elements. A person of ordinary skills in the art can understand specific meanings of these terms in this application as appropriate to specific situations.

The term "and/or" in this application is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between contextually associated objects.

In the embodiments of this application, the same reference signs denote the same components. For brevity, in different embodiments, detailed descriptions of the same components are not repeated. It should be understood that, as shown in the accompanying drawings, dimensions such as thickness, length, and width of various components and dimensions such as overall thickness, length, and width of integrated devices in the embodiments of this application are merely for illustrative purposes and should not constitute any limitations on this application.

In this application, "a plurality of" means more than two (inclusive).

In this application, the battery cell may include a lithium-ion secondary battery cell, a lithium-ion primary battery cell, a lithium-sulfur battery cell, sodium-lithium-ion battery cell, a sodium-ion battery cell, a magnesium-ion battery cell, or the like. This is not limited in the embodiments of this application. The battery cell may be cylindrical, flat, cuboid, or of other shapes, which is not limited in the embodiments of this application either. Battery cells are typically divided into three types by packaging method: cylindrical cell, prismatic cell, and pouch cell. The type of battery is not limited in the embodiments of this application either.

The battery cell includes an electrode assembly and an electrolyte. The electrode assembly includes a positive electrode plate, a negative electrode plate, and a separator. The battery cell operates relying on the migration of metal ions between the positive electrode plate and negative electrode plate. The positive electrode plate includes a positive electrode current collector and a positive electrode active substance layer. The positive electrode active substance layer is applied on a surface of the positive electrode current collector. The positive electrode current collector includes a positive electrode current collecting part and a positive electrode protrusion protruding from the positive electrode current collecting part. The positive electrode current collecting part is coated with the positive electrode active substance layer, at least part of the positive electrode protrusion is uncoated with the positive electrode active substance layer, and the positive electrode protrusion is used as a positive electrode tab. With a lithium-ion battery as an example, its positive electrode current collector may be made of aluminum, and its positive electrode active material layer includes a positive electrode active substance, which may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. The negative electrode current collector includes a negative electrode current collecting part and a negative electrode protrusion protruding from the negative electrode current collecting part. The negative electrode current collecting part is coated with the negative electrode active substance layer, at least part of the negative electrode protrusion is uncoated with the negative electrode active substance layer, and the negative electrode protrusion is used as a negative electrode tab. The negative electrode current collector may be made of copper, and the negative electrode active material layer includes a negative electrode active substance which may be carbon, silicon, or the like.

The development of battery technologies should consider many design factors, for example, performance parameters such as energy density, cycle life, discharge capacity, and charge and discharge rate. In addition, safety performance also needs to be considered.

The inventors have found that during the production of battery cells, waste of the batteries is produced, and storage of the waste not only takes up space, but also causes safety risks. The waste of batteries includes but is not limited to graphite, current collectors, lithium and/or sodium containing waste, and the like. In particular, the lithium and/or sodium containing waste has high chemical activity and is likely to react with water and oxygen in the external environment, causing spontaneous combustion or even explosion.

In view of this, the inventors have proposed a battery handling system. The battery handling system may be used to collect and dispose of the waste of batteries produced during a battery production process and can ensure safety of a waste disposal process. Certainly, the battery handling system can also be used to dispose of waste produced by failed batteries.

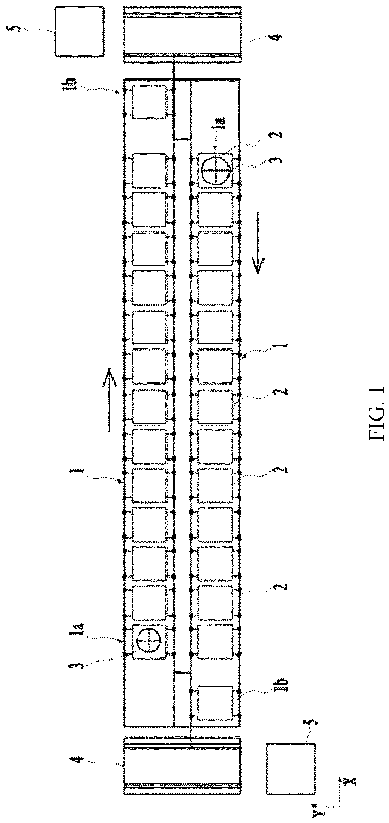

For better understanding this application, the following describes the embodiments of this application with reference to FIG. 1 to FIG. 13.

FIG. 1 is a schematic diagram depicting a structure of a battery handling system according to some embodiments of this application. As shown in FIG. 1, the battery handling system according to the embodiments of this application includes: a moving mechanism 4; an accommodating mechanism 1, including a first side 1a and a second side 1b that are opposite each other along a length direction X of the accommodating mechanism, configured to accommodate a plurality of immersion mechanisms 2 and move the plurality of immersion mechanisms 2 within the accommodating mechanism 1; the plurality of immersion mechanisms 2, arranged in sequence along the length direction X of the accommodating mechanism 1, where the plurality of immersion mechanisms 2 are movably connected to the accommodating mechanism 1 in a direction of the first side 1a pointing toward the second side 1b, and the immersion mechanism 2 accommodates an immersion liquid; and a transfer mechanism 3, arranged opposite the first side 1a of the accommodating mechanism 1 and configured to transfer waste of the battery to the immersion mechanism 2, where the waste is immersed in the immersion liquid. The accommodating mechanism 1 is provided in plurality, and the plurality of accommodating mechanisms 1 are arranged along a width direction Y of the accommodating mechanism 1. In adjacent two of the accommodating mechanisms 1, the second side 1b of one of the accommodating mechanisms 1 is opposite the first side 1a of another one of the accommodating mechanisms 1. The moving mechanism 4 is configured to move the immersion mechanism 2 that is in one of the accommodating mechanisms 1 near the second side 1b to the first side 1a of another one of the accommodating mechanisms 1, and relocate the waste that is in the immersion mechanism 2.

The direction X shown in FIG. 1 denotes the length direction of the accommodating mechanism 1, and Y denotes the width direction of the accommodating mechanism 1. Other arrow directions denote moving directions of the immersion mechanisms 2.

In the embodiments of this application, the waste of batteries includes but is not limited to graphite, current collectors, lithium and/or sodium containing waste, and the like. Using lithium-containing waste as an example, lithium has high chemical activity and can be recycled by chemically reacting with the immersion liquid. For example, the immersion liquid is water. The lithium-containing waste reacts with the water to produce hydrogen and lithium hydroxide. The hydrogen is discharged to the external environment. Because the lithium hydroxide is difficult to dissolve in water, the lithium hydroxide covers the surface of the lithium-containing waste to prevent further reaction, thus allowing for safe disposal of the lithium-containing waste. Certainly, the immersion liquid may also be methyl silicone oil. The surface of the lithium-containing waste is wrapped by the methyl silicone oil. Therefore, the lithium-containing waste is physically wrapped, and it is difficult for the wrapped lithium-containing waste to contact and react with external water and oxygen, so as to make the lithium-containing waste inert, thus safely disposing of the lithium-containing waste.

The transfer mechanism 3 serves as a conveying device, which mainly functions to transfer the waste of the battery to the immersion mechanism 2. For example, the transfer mechanism 3 is a conveying belt structure that conveys the waste to the immersion mechanism 2. Certainly, the transfer mechanism 3 may alternatively be an apparatus having a retractable structure. After the transfer mechanism 3 receives the waste, the transfer mechanism 3 extends into the immersion mechanism 2 to release the waste into the immersion mechanism 2. After the waste is released, the transfer mechanism 3 retracts and moves away from the immersion mechanism 2.

The accommodating mechanism 1 may accommodate an or be provided with no immersion liquid. When the accommodating mechanism 1 accommodates an immersion liquid, the accommodating mechanism 1 may be a grooved structure that has an opening pointing toward the transfer mechanism 3. The immersion mechanism 2 is immersed in the immersion liquid of the accommodating mechanism 1, and the immersion liquid of the accommodating mechanism 1 can communicate with the immersion liquid in the immersion mechanism 2. In addition, the accommodating mechanism 1 also has a conveying function for conveying the immersion mechanism 2. Alternatively, when the accommodating mechanism 1 is provided with no immersion liquid, the accommodating mechanism 1 may be an apparatus having a conveying function, for example, a conveying belt structure, conveying the immersion mechanism 2 from the first side 1a to the second side 1b.

The plurality of accommodating mechanisms 1 are arranged along the width direction Y of the accommodating mechanism 1. For example, the plurality of accommodating mechanisms 1 may be two accommodating mechanisms 1, three accommodating mechanisms 1, or four accommodating mechanisms 1. The concentrated arrangement of the plurality of accommodating mechanisms 1 helps reduce the total space occupied by the system.

The plurality of immersion mechanisms 2 can all carry waste, and the waste comes into contact with the immersion liquid in the immersion mechanisms 2. The immersion liquid wraps the outer surface of the waste and makes the waste inert, or a chemical reaction takes place between the immersion liquid and the waste to reduce the chemical activity of the waste. When the accommodating mechanism 1 accommodates the immersion liquid, the immersion mechanism 2 may include a first communicating portion, so that the immersion liquid in the immersion mechanism 2 communicates with the immersion liquid in the accommodating mechanism 1. Certainly, the immersion liquid in the immersion mechanism 2 may instead not communicate with the immersion liquid in the accommodating mechanism 1.

The moving mechanism 4 has a function of relocating the immersion mechanism 2 that is in the accommodating mechanism 1 near the second side 1b. For example, the moving mechanism 4 lifts the immersion mechanism 2 in the accommodating mechanism 1 away from the accommodating mechanism 1 and moves the immersion mechanism 2 to another position, for example, to the drying mechanism 5 or the first side 1a of the adjacent accommodating mechanism 1.

In the embodiments of this application, the transfer mechanism 3 is opposite the first side 1a of the accommodating mechanism 1 and configured to transfer the waste of the battery to the immersion mechanism 2 so that the waste is in contact with the immersion liquid. The waste is physically wrapped by the immersion liquid and becomes inert, or a chemical reaction takes place between the waste and the immersion liquid to reduce activity of the waste. Thus, the waste is disposed of safely, improving the safety of the battery production process. The accommodating mechanisms 1 is provided in plurality, and each accommodating mechanism 1 can accommodate a plurality of immersion mechanisms 2. The plurality of accommodating mechanisms 1 can operate simultaneously to improve the efficiency of waste disposal. In addition, the plurality of accommodating mechanisms 1 are arranged along the width direction of the accommodating mechanism 1, which can greatly save the space occupied by the battery handling system. In adjacent two of the accommodating mechanisms 1, the second side 1b of one of the accommodating mechanisms 1 is opposite the first side 1a of another one of the accommodating mechanisms 1. The moving mechanism 4 can move the immersion mechanism 2 that is in one of the accommodating mechanisms 1 near the second side 1b to the first side 1a of another one of the accommodating mechanisms 1. The moving of the immersion mechanism 2 allows for continuity of the production, further improving the efficiency of waste disposal.

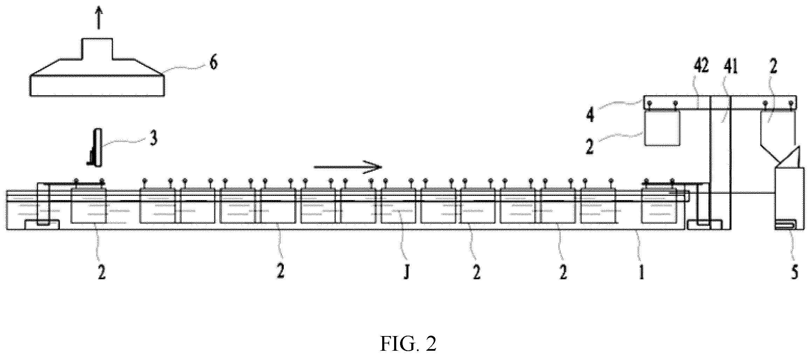

FIG. 2 is a schematic diagram depicting a structure of a battery handling system according to some other embodiments of this application. To further improve the safety of the battery production process, as shown in FIG. 2, in some embodiments, the battery handling system further includes an exhaust mechanism 6. The exhaust mechanism 6 is opposite the accommodating mechanism 1 and located above the accommodating mechanism 1, and the exhaust mechanism 6 is configured to convey the gases from the accommodating mechanism 1 to an external environment. In the embodiments of this application, the exhaust mechanism 6 discharges the gases being in the battery handling system, which can effectively prevent the gases in the external environment from entering the battery handling system, thereby improving the safety performance during the battery production process. The arrow direction at the exhaust mechanism 6 as shown in FIG. 2 indicates the direction of gas flow, and the arrow direction at the accommodating mechanism 1 indicates the direction of movement of the immersion mechanism 2.

The first side 1a of the accommodating mechanism 1 is an end where waste is loaded. Here, external gases are likely to leak into the battery handling system. The immersion mechanism 2, which is located at the second side 1b of the accommodating mechanism 1, has a relatively high concentration of flammable and explosive gases due to long contact time between the waste and the immersion liquid J. In addition, the immersion mechanism 2 is an end where waste is discharged, and external gases are also likely to leak here into the battery handling system.

To further improve the safety performance during the battery production process, in some examples, the exhaust mechanism 6 is opposite the first side 1a and/or second side 1b of the accommodating mechanism 1. The exhaust mechanism 6 can effectively prevent external gases from leaking in from the first side 1a and/or the second side 1b, further improving the safety performance during the battery production process.

Still refer to FIG. 2. In some embodiments, the moving mechanism 4 includes a first moving portion 41 and a second moving portion 42. The first moving portion 41 is movably connected to the second moving portion 42 along an axial direction of the first moving portion 41, and the immersion mechanism 2 is movably connected to the second moving portion 42.

When the immersion mechanism 2 moves to the second side 1b of the accommodating mechanism 1, the second moving portion 42 moves along the axial direction of the first moving portion 41 to the immersion mechanism 2. The second moving portion 42 is configured to be connected to the immersion mechanism 2. The second moving portion 42 drives the immersion mechanism 2 to move along the axial direction of the first moving portion 42 to a given height. Then, the second moving portion 42 drives the immersion mechanism 2 to continue to move to the drying mechanism 5 and release the waste there.

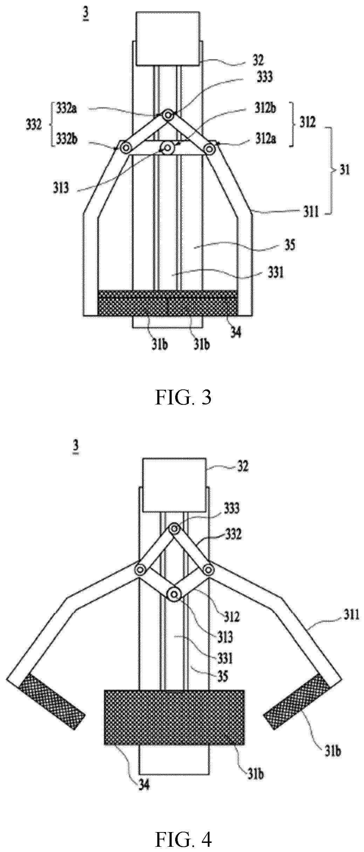

FIG. 3 is a schematic diagram depicting a structure of a transfer mechanism of a battery handling system according to some embodiments of this application. FIG. 4 is a schematic diagram depicting a structure of the transfer mechanism shown in FIG. 3 being in an on state. As shown in FIG. 2 to FIG. 4, in some embodiments, the transfer mechanism 3 includes two collection members 31 that are opposite each other. The two collection members 31 are rotatably connected to each other, so that the two collection members 31 move toward each other and come together to form a collection cavity for carrying the waste, or the two collection members 31 move away from each other to release the waste into the immersion mechanism 2.

In the embodiments of this application, when the transfer mechanism 3 needs to carry waste, the two collection members 31 come together to form a collection cavity, and the waste can be accommodated in the collection cavity. When the transfer mechanism 3 needs to release waste into the immersion mechanism 2, the two collection members 31 move away from each other and the waste can be released from the collection cavity into the immersion mechanism 2.

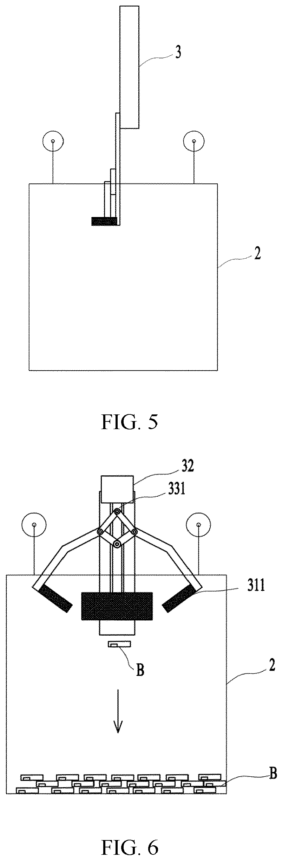

FIG. 5 is a schematic diagram depicting a structure of a transfer mechanism and an immersion mechanism of a battery handling system according to some embodiments of this application. FIG. 6 is a schematic diagram depicting a structure of the transfer mechanism and immersion mechanism shown in FIG. 5 being in a state of releasing waste.

As shown in FIG. 3 to FIG. 6, in some examples, the transfer mechanism 3 further includes a first drive mechanism 32, a connecting member, and a bracket 35. The connecting member includes a first connecting rod 331 and two second connecting rods 332 arranged opposite each other. The first connecting rod 331 is in drive connection with the first drive mechanism 32. The second connecting rod 332 includes a first end 332a and a second end 332b that are opposite each other. The first end 332a is rotatably connected to the first connecting rod 331 via a first connecting shaft 333, and the first connecting shaft 333 is fixedly connected to the first connecting rod 331. The collection member 31 includes a collection portion 311 and a third connecting rod 312. The third connecting rod 312 includes a third end 312a and a fourth end 312b that are opposite each other. The third end 312a is fixedly connected to the collection portion 311. The third end 312a is rotatably connected to the second end 332b. The fourth end 312b is rotatably connected to the bracket 35 via a second connecting shaft 313, and the second connecting shaft 313 is fixedly connected to the bracket 35. The first drive mechanism 32 drives the first connecting rod 331 to move up and down relative to the bracket 35, the first connecting shaft 333 is driven to move up and down, the first connecting rod 331 and the second connecting rod 332 rotate relative to each other, and the second connecting rod 332 and the third connecting rod 312 rotate relative to each other, so that the two collection portions 311 move toward or away from each other.

When the transfer mechanism 3 needs to carry waste B, the first drive mechanism 32 drives the first connecting rod 331 to move toward the immersion mechanism 2, and the two collection portions 311 move toward each other and come together to form the collection cavity, so the waste B can be carried in the collection cavity. When the transfer mechanism 3 needs to release waste B, the first drive mechanism 32 drives the first connecting rod 331 to move away from the immersion mechanism 2, and the two collection portions 311 move away from each other to release the waste B into the immersion mechanism 2. The arrow direction shown in FIG. 6 is the direction of movement of the waste B.

When the transfer mechanism releases the waste into the immersion mechanism, at least a part of the collection member is located in the immersion liquid. Because a density of the waste may be lower than a density of the immersion liquid, the waste may float on the surface of the immersion liquid and float out of the transfer mechanism, so that the waste may not be able to be released into the immersion mechanism, thereby increasing the difficulty of subsequent handling.

To prevent the waste B from floating out of the transfer mechanism 3, in some examples, the two collection members 31 come together to form an opening of the collection cavity back away from the immersion mechanism 2. The transfer mechanism 3 further includes a second drive mechanism and a top cover 34 in drive connection with the second drive mechanism. The second drive mechanism 32 drives the top cover 34 to move so that the top cover 34 covers or opens the opening. When the transfer mechanism 3 needs to carry waste B, the first drive mechanism 32 drives the first connecting rod 331 to move toward the immersion mechanism 2 so that the two collection portions 311 come together to form the collection cavity, and the second drive mechanism drives the top cover 34 to move away from the immersion mechanism 2 so that the top cover 34 opens its opening, and thus the waste B can be carried in the collection cavity. After the transfer mechanism 3 receives the waste B, the second drive mechanism drives the top cover 34 to move toward the immersion mechanism 2, and the top cover 34 closes the opening. This can prevent a foreign object from falling into the waste B. In addition, when the waste B is released from the transfer mechanism 3 to the immersion mechanism 2, the top cover 34 can block to some extent the waste B from floating out of the transfer mechanism 3.

To reduce resistance against the transfer mechanism 3 transferring the waste B in the immersion liquid, in some examples, the transfer mechanism 3 includes a second communicating portion 31b. The second communicating portion 31b communicates the collection cavity with the immersion mechanism 2 to allow the immersion liquid to flow between the immersion mechanism 2 and the collection cavity.

When the transfer mechanism 3 is transferring the waste B to the immersion mechanism 2, the transfer mechanism 3 moves toward the immersion mechanism 2, and the immersion liquid can flow from the immersion mechanism 2 into the transfer mechanism 3 through the second communication portion 31b, thereby reducing resistance against the transfer mechanism 3 moving toward the immersion mechanism 2.

When the waste is released from above the immersion liquid, there may be problems such as splashing of the immersion liquid. In comparison, the transfer mechanism 3 in this application moves into the immersion liquid of the immersion mechanism 2 and releases the waste B there. The waste B enters the immersion liquid gently and does not cause a large impact on the immersion liquid, thus preventing problems such as the splashing of the immersion liquid. After the transfer mechanism 3 releases the waste B, the immersion liquid can flow out from the transfer mechanism 3 to the immersion mechanism 2 through the second communicating portion 31b, preventing the immersion liquid from being carried out by the transfer mechanism 3.

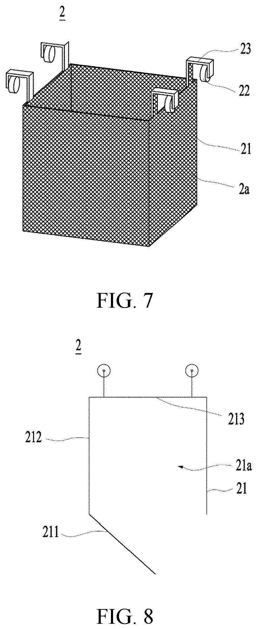

FIG. 7 is a schematic diagram depicting a structure of an immersion mechanism of a battery handling system according to some embodiments of this application. As shown in FIG. 7, in some embodiments, the accommodating mechanism accommodates an immersion liquid. The immersion mechanism 2 includes a first communicating portion 2a, where the first communicating portion 2a is configured to communicate the accommodating mechanism with the immersion mechanism 2 so that the immersion liquid flows between the accommodating mechanism and the immersion mechanism 2. In the embodiments of this application, the accommodating mechanism is provided with the immersion liquid, and the immersion liquid flows into the immersion mechanism 2 through the first communicating portion 2a, so that the waste and the immersion liquid complete an immersion process in the immersion mechanism 2. After the completion of the immersion process, when the moving mechanism moves the immersion mechanism 2, the immersion liquid in the immersion mechanism 2 flows out to the accommodating mechanism through the first communicating portion 2a, which reduces weight of the moving mechanism, thereby reducing energy consumption.

In the embodiments of this application, the first communicating portion 2a may be in many forms. The specific structural form of the first communicating portion 2a is not limited herein, provided that the first communicating portion 2a can implement that the immersion liquid flows between the accommodating mechanism and the immersion mechanism 2. For example, the first communicating portion 2a may be a communicating hole. For example, the immersion mechanism 2 is a mesh structure, the mesh structure including a plurality of communicating holes, and the immersion liquid can flow between the accommodating mechanism and the immersion mechanism 2 through the communicating holes. Certainly, the first communicating portion 2a may instead be a communicating tube. The communicating tube includes two opposite ends. One of the two ends is connected to a side wall or bottom wall of the immersion mechanism 2, and the other end is connected to the accommodating mechanism. The immersion liquid can flow between the accommodating mechanism and the immersion mechanism 2 through the communicating tube.

FIG. 8 is a schematic diagram depicting a structure of the immersion mechanism shown in FIG. 7 being in an on state. As shown in FIG. 8, in some embodiments, the immersion portion 21 includes a side wall 212 and a bottom wall 211. The bottom wall 211 is rotatably connected to the side wall 212, so that the bottom wall 211 and the side wall 212 enclose an immersion cavity 21a to carry the waste, or the bottom wall 211 and the side wall 212 are separated to release the waste.

In the embodiments of this application, the bottom wall 211 and the side wall 212 enclose the immersion cavity 21a. The waste transferred by the transfer mechanism is released into the immersion cavity 21a. The immersion portion 21 moves from the first side to the second side, and the immersion of the waste is completed in the immersion portion 21. The moving mechanism moves the immersion portion 21 to a next operation, for example, to a drying mechanism. The bottom wall 211 and the side wall 212 are separated and the waste can be released into the drying mechanism for drying.

Because the waste may have a lower density than the immersion liquid, the waste may float on the surface of the immersion liquid when the waste is immersed inside the immersion mechanism, which may cause the waste to float out of the immersion mechanism, increasing the difficulty of subsequent handling.

To prevent the waste from floating out of the immersion mechanism 2, in some embodiments, the immersion portion 21 further includes a top wall 213. The top wall 213 is arranged on a side of the side wall 212 that faces away from the bottom wall 211, and the top wall 213 is configured to cover the immersion cavity 21a. The top wall 213 can prevent the waste from floating out of the immersion mechanism 2.

To further prevent the waste from floating out of the immersion mechanism 2, in some embodiments, some gap is left between an end portion of the immersion portion 21 near the transfer mechanism and the immersion liquid in the accommodating mechanism.

Still refer to FIG. 7 and FIG. 8. The immersion mechanism 2 includes: an immersion portion 21, located inside the accommodating mechanism, where the immersion portion 21 is provided with a first communicating portion 2a to allow the immersion liquid of the accommodating mechanism to flow into the immersion portion 21 to immerse the waste; and a moving portion 22, configured to carry the immersion portion 21 to move in the accommodating portion of the accommodating mechanism.

Optionally, the immersion mechanism 2 may further include a transition portion 23. The transition portion 23 connects the immersion portion 21 and the moving portion 22, and the transition portion 23 is fixedly connected to the accommodating mechanism. In this way, strength of the connection between the immersion mechanism 2 and the accommodating mechanism is ensured.

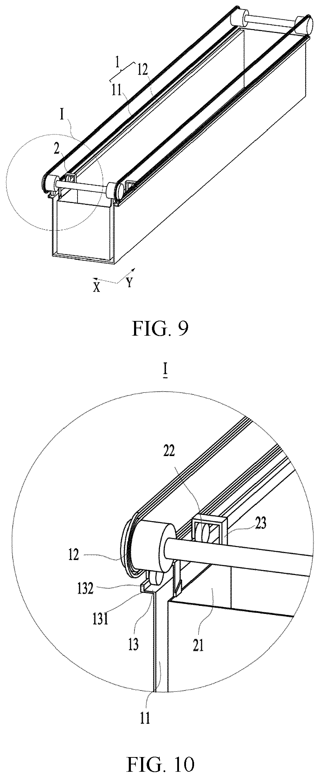

FIG. 9 is a schematic diagram depicting a structure of an accommodating mechanism and an immersion mechanism of a battery handling system according to some embodiments of this application. FIG. 10 is a schematic diagram of the accommodating mechanism and immersion mechanism shown in FIG. 9 enlarged at I.

As shown in FIG. 9 and FIG. 10, in some embodiments, the accommodating mechanism 1 includes an accommodating portion 11 and a conveying portion 12. The conveying portion 12 is arranged in the accommodating portion 11, and the accommodating portion 11 is configured to accommodate the immersion liquid.

The immersion portion 21 is located in the accommodating portion 11, and the immersion liquid of the accommodating portion 11 flows into the immersion portion 21 through the first communicating portion to immerse the waste. The moving portion 22 is movably connected to the accommodating portion 11. The transition portion 23 is fixedly connected to the conveying portion 12, and the conveying portion 12 drives the transition portion 23 to move, so that the immersion mechanism 2 moves relative to the accommodating portion 11.

In the embodiments of this application, the transition portion 23 is fixedly connected to the conveying portion 12, which can ensure stability of the connection between the immersion mechanism 2 and the accommodating mechanism 1. The moving portion 22 is movably connected to the accommodating portion 11. When the conveying portion 12 drives the transition portion 23 to move, the moving portion 22 moves relative to the accommodating portion 11 and can move along a length direction of the accommodating portion 11, so that the immersion mechanism 2 can move relative to the accommodating portion 11 from the first side to the second side.

To help control of the amount of immersion liquid in the accommodating mechanism 1, the accommodating mechanism 1 may be provided with an overflow opening, an inlet, an outlet, and the like.

Optionally, the accommodating mechanism 1 includes a guide portion 13 that extends along the length direction X of the accommodating mechanism 1, where the guide portion 13 is connected to the accommodating portion 11, the guide portion 13 is movably connected to the moving portion 22, and the guide portion 13 is configured to limit the moving portion 22 in the width direction Y When the moving portion 22 moves along the length direction X of the accommodating mechanism 1, the moving portion 22 is under the limiting of the guide portion 13 and therefore does not deviate, ensuring overall stability of the immersion mechanism 2 during movement.

In the embodiments of this application, the guide portion 13 may be in many forms, and the specific structure of the guide portion 13 is not limited herein.

In some examples, the guide portion 13 may be a first guide groove provided at the accommodating mechanism 1. At least part of the moving portion 22 is located in the first guide groove and can move stably along the length direction X of the accommodating mechanism 1.

In some other examples, the guide portion 13 may further include a first guide member 131 and a second guide member 132. The first guide member 131 is connected to a side of the accommodating portion 11 near the transfer mechanism 3. Both the first guide member 131 and the second guide member 132 extend along the length direction X of the accommodating mechanism 1. In addition, the first guide member 131 is connected to the second guide member 132 to define a second guide groove. At least part of the moving portion 22 is located in the second guide groove and can move steadily along the length direction X of the accommodating mechanism 1.

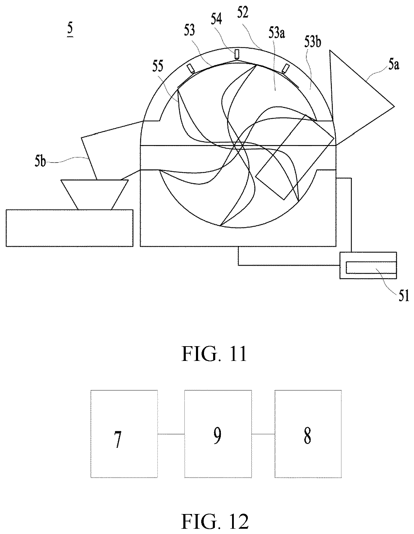

FIG. 11 is a schematic diagram depicting a structure of a drying mechanism of a battery handling system according to some embodiments of this application. As shown in FIG. 11, in some embodiments, the battery handling system further includes a drying mechanism 5. The moving mechanism is configured to transfer the immersion mechanism to an inlet 5a of the drying mechanism 5, and the waste in the immersion mechanism can be released to the inlet 5a of the drying mechanism 5 and dried by the drying mechanism 5. For example, the side wall and bottom wall of the immersion mechanism are separated to release the waste to the inlet 5a of the drying mechanism 5. In the embodiments of this application, the drying mechanism 5 dries the waste, and the dried waste can be recycled.

For example, the drying mechanism 5 includes the inlet 5a, an outlet 5b, an outer housing 52, an inner housing 53, a plurality of nozzles 54, and a plurality of blades 55. The inner housing 53 has a first cavity 53a. The inner housing 53 is located in the outer housing 52, and a second cavity 53b is formed between the inner housing 53 and the outer housing 52. The inlet 5a is connected to the first cavity 53a, so that the waste is conveyed through the inlet 5a to the first cavity 53a. The plurality of blades 55 are located in the first cavity 53a. The blade 55 includes two opposite ends. The plurality of blades 55 are spaced apart along a circumference of the inner housing 53 on one end, and the plurality of blades 55 converge at the center of the inner housing 53 on the other end. In addition, a drying gap is formed between two adjacent blades 55 for the waste to be dried. The plurality of nozzles 54 each include two opposite ends. The plurality of nozzles 54 each have one end provided at the inner housing 53 to connect the first cavity 53a and the second cavity 53b, so that the immersion liquid with the waste dried flows out into the second cavity 53b through the first cavity 53a. The outlet 5b is connected to the first cavity 53a for the dried waste to be discharged through the outlet 5b.

To reduce the use of immersion liquid, in some embodiments, the drying mechanism 5 further includes a reflux assembly 51. The reflux assembly 51 is configured to make the immersion liquid produced by the drying mechanism 5 flow back to the immersion mechanism, so that the immersion liquid can be recycled. For example, the reflux assembly 51 is connected to the second cavity 53b, and the immersion liquid with the waste dried flows to the reflux assembly 51 through the nozzle 54 and the second cavity 53b.

After a chemical reaction between the lithium-containing waste and the immersion liquid takes place, flammable and explosive gases such as hydrogen may be produced, while oxygen and hydrogen in the external environment entering the battery handling system increases safety hazards of the battery handling system.

FIG. 12 is a schematic diagram depicting a structure of a battery handling system according to some other embodiments of this application. As shown in FIG. 12, in some embodiments, the battery handling system further includes: a detection mechanism 7, arranged inside the accommodating mechanism and configured to detect process parameters related to the inside of the accommodating mechanism; an adjustment mechanism 8, arranged inside the accommodating mechanism and configured to adjust the process parameters related to the inside of the accommodating mechanism; and a control mechanism 9 communicatively connected to the detection mechanism 7 and the adjustment mechanism 8 and configured to control on/off of the adjustment mechanism 8 according to the process parameters detected by the detection mechanism 7.

In the embodiments of this application, the process parameters include but are not limited to gas concentration, gas temperature, immersion liquid temperature, smoke concentration, and the like. Correspondingly, the detection mechanism 7 includes an air pressure sensor, a gas concentration detector, a temperature sensor, and the like. The adjustment mechanism 8 includes a fire extinguisher, a smoke alarm, a water spray mechanism, and the like. For example, when the temperature sensor detects that a temperature inside the battery handling system is high, the control mechanism 9 controls the water spray mechanism to spray water to reduce the temperature. Certainly, the control mechanism 9 can also be communicatively connected to other mechanisms. For example, the control mechanism 9 is connected to the exhaust mechanism. When the air pressure sensor detects that the pressure inside the battery handling system does not meet a preset pressure, the control mechanism 9 can control, for example, the exhaust mechanism to adjust air speed, to adjust the pressure inside the system.

The detection mechanism 7 in the embodiments of this application transmits the process parameters detected to the control mechanism 9. The control mechanism 9 performs calculation based on the process parameters received and sends a control instruction to the adjustment mechanism 8 to control the adjustment mechanism 8 to perform an action corresponding to the control instruction, thereby adjusting the process parameters related to the inside of the battery handling system, improving the safety performance during the battery production process.

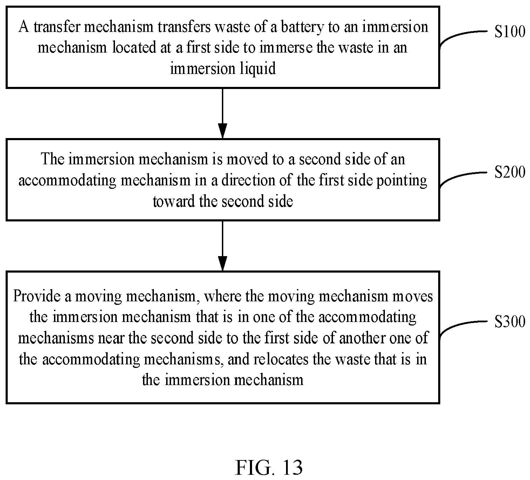

FIG. 13 is a schematic flowchart of a battery handling method according to some embodiments of this application. As shown in FIG. 13, an embodiment of this application further provides a battery handling method. The method uses the battery handling system according to any one of the foregoing embodiments. The method includes:
S100: The transfer mechanism transfers the waste of the battery to the immersion mechanism located at the first side so as to immerse the waste in the immersion liquid.
S200: The immersion mechanism is moved to the second side of the accommodating mechanism in the direction of the first side pointing toward the second side.
S300: Provide the moving mechanism, where the moving mechanism relocates the waste that is in the immersion mechanism, and moves the immersion mechanism to the first side of an adjacent accommodating mechanism.

Although this application has been described with reference to preferred embodiments, various modifications can be made to this application and the components therein can be replaced with equivalents without departing from the scope of this application. In particular, various technical features mentioned in the embodiments can be combined in any forms provided that there is no structural conflict. This application is not limited to the particular embodiments disclosed in this specification, but includes all technical solutions that fall within the scope of the claims.

## Claims

1. A battery handling system, comprising:
a moving mechanism;
an accommodating mechanism, comprising a first side and a second side that are opposite each other along a length direction of the accommodating mechanism;
a plurality of immersion mechanisms, arranged in sequence along the length direction of the accommodating mechanism, wherein the plurality of immersion mechanisms are movably connected to the accommodating mechanism in a direction of the first side pointing toward the second side, and the immersion mechanism accommodates an immersion liquid; and
a transfer mechanism, arranged opposite the first side of the accommodating mechanism, and configured to transfer waste of a battery to the immersion mechanisms, wherein the waste is immersed in the immersion liquid;
wherein the accommodating mechanism is provided in plurality; the plurality of accommodating mechanisms are arranged along a width direction of the accommodating mechanisms; and in adjacent two of the accommodating mechanisms, the second side of one of the accommodating mechanisms is opposite the first side of another one of the accommodating mechanisms; and
the moving mechanism is configured to move the immersion mechanism that is in one of the accommodating mechanisms and near the second side to the first side of another one of the accommodating mechanisms, and relocate the waste that is in the immersion mechanism.

2. The battery handling system according to claim 1, wherein the accommodating mechanism accommodates an immersion liquid; and
the immersion mechanism comprises a first communicating portion, wherein the first communicating portion is configured to communicate the accommodating mechanism with the immersion mechanism to allow the immersion liquid to flow between the accommodating mechanism and the immersion mechanism.

3. The battery handling system according to claim 2, wherein
the accommodating mechanism comprises an accommodating portion and a conveying portion, the conveying portion being arranged in the accommodating portion, and the accommodating portion accommodating the immersion liquid; and
the immersion mechanism comprises:
an immersion portion arranged inside the accommodating portion, wherein the immersion portion is provided with the first communicating portion to allow the immersion liquid to flow between the accommodating portion and the immersion portion; and
a moving portion, configured to carry the immersion portion to move in the accommodating portion;
wherein the conveying portion drives the moving portion to move so that the immersion mechanism moves relative to the accommodating portion.

4. The battery handling system according to claim 3, wherein the accommodating mechanism comprises a guide portion that extends along the length direction of the accommodating mechanism, the guide portion is connected to the accommodating portion, the guide portion is movably connected to the moving portion, and the guide portion is configured to limit the moving portion in the width direction.

5. The battery handling system according to claim 3 or 4, wherein the immersion portion comprises a bottom wall and a side wall, wherein the bottom wall is rotatably connected to the side wall, so that the bottom wall and the side wall enclose an immersion cavity to carry the waste; or the bottom wall and the side wall are separated to release the waste.

6. The battery handling system according to claim 5, wherein the immersion portion further comprises a top wall, the top wall being arranged on a side of the side wall that faces away from the bottom wall, and the top wall is configured to cover the immersion cavity.

7. The battery handling system according to any one of claims 1 to 6, wherein the transfer mechanism comprises two collection members that are opposite each other, the two collection members being rotatably connected to each other so that the two collection members move toward each other and come together to form a collection cavity for carrying the waste, or the two collection members move away from each other to release the waste into the immersion mechanism.

8. The battery handling system according to claim 7, wherein
the transfer mechanism comprises a first drive mechanism, a connecting member, and a bracket, wherein the connecting member comprises a first connecting rod and two second connecting rods, the two second connecting rods being arranged opposite each other, the first connecting rod is in drive connection with the first drive mechanism, and the second connecting rod comprises a first end and a second end that are opposite each other, the first end being rotatably connected to the first connecting rod via a first connecting shaft, and the first connecting shaft being fixedly connected to the first connecting rod; and
the collection member comprises a collection portion and a third connecting rod, wherein the third connecting rod comprises a third end and a fourth end that are opposite each other, the third end being fixedly connected to the collection portion, the third end being rotatably connected to the second end, and the fourth end being rotatably connected to the bracket via a second connecting shaft, wherein the second connecting shaft is fixedly connected to the bracket;
wherein the first drive mechanism drives the first connecting rod to move relative to the bracket, the first connecting rod and the second connecting rod rotate relative to each other, and the second connecting rod and the third connecting rod rotate relative to each other, so that the two collection portions move toward or away from each other.

9. The battery handling system according to claim 8, wherein
the two collection members come together to form an opening of the collection cavity back away from the immersion mechanism, and the transfer mechanism further comprises a second drive mechanism and a top cover that is in drive connection with the second drive mechanism, the second drive mechanism driving the top cover to move so that the top cover closes or opens the opening.

10. The battery handling system according to any one of claims 7 to 9, wherein
the transfer mechanism comprises a second communicating portion, wherein the second communicating portion communicates the collection cavity with the immersion mechanism to allow the immersion liquid to flow between the immersion mechanism and the collection cavity.

11. The battery handling system according to any one of claims 1 to 10, wherein
the battery handling system further comprises a drying mechanism, wherein the moving mechanism is configured to transfer the immersion mechanism to an inlet of the drying mechanism, and the waste in the immersion mechanism is able to be released to the inlet of the drying mechanism and dried by the drying mechanism.

12. The battery handling system according to claim 11, wherein
the drying mechanism further comprises a reflux assembly configured to make the immersion liquid produced by the drying mechanism flow back to the immersion mechanism.

13. The battery handling system according to any one of claims 1 to 12, further comprising an exhaust mechanism, wherein the exhaust mechanism is opposite the accommodating mechanism and located above the accommodating mechanism, and the exhaust mechanism is configured to convey gases from the accommodating mechanism to an external environment.

14. The battery handling system according to claim 13, wherein the exhaust mechanism is opposite the first side and/or second side of the accommodating mechanism.

15. The battery handling system according to any one of claims 1 to 14, further comprising:
a detection mechanism, arranged inside the accommodating mechanism and configured to detect process parameters related to the inside of the accommodating mechanism;
an adjustment mechanism, arranged inside the accommodating mechanism and configured to adjust the process parameters related to the inside of the accommodating mechanism; and
a control mechanism, communicatively connected to the detection mechanism and the adjustment mechanism and configured to control on/off of the adjustment mechanism according to the process parameters detected by the detection mechanism.

16. A battery handling method using the battery handling system according to any one of claims 1 to 15, wherein the method comprises:
transferring, by the transfer mechanism, the waste from the battery to the immersion mechanism located on the first side so as to immerse the waste in the immersion liquid;
letting the immersion mechanism move in the direction of the first side pointing toward the second side to the second side of the accommodating mechanism; and
moving, by the moving mechanism, the immersion mechanism that is in one of the accommodating mechanisms and near the second side to the first side of another one of the accommodating mechanisms, and relocating the waste that is in the immersion mechanism.
